# EUROPEAN PATENT APPLICATION

(11) **EP 1 659 767 A1**
(43) Date of publication of application: **24.05.2006**
(21) Application number: 05025238.6
(22) Date of filing: 18.11.2005
(51) Int. Cl.: H04M 1/725

(54) **System and method for offering wireless internet services**

(30) Priority: 18.11.2004 KR 2004094653
(71) Applicant: Samsung Electronics Co., Ltd., Suwon-si, Gyeonggi-Do (KR)
(72) Inventor: Hwang, Soon-Shik, Yeongtong-gu, Suwon-si, Gyeonggi-do (JP); Kim, Soon-Jin, Paldal-gu, Suwon-city, Kyungki-do (JP)
(74) Representative: Lang, Johannes

(57) **Abstract**

A method and apparatus are provided for offering wireless Internet services in a wireless Internet service system having a web server and a plurality of mobile terminals connected to the web server via a wireless network. The method comprises the steps of receiving access information including rotation status of a display unit from a mobile terminal requesting for a wireless Internet service, extracting information about the rotation status of the display unit from the received access information, changing wireless Internet service data provided to the mobile terminal to have a format corresponding to the extracted rotation status information, and sending the wireless Internet service data in the changed format to the mobile terminal. A user can see the wireless Internet service data displayed on the mobile terminal in an upright position, regardless of the rotation status of the display unit. This ability enhances user convenience.

## Description

### BACKGROUND OF THE INVENTION

### Field of the Invention:

The present invention relates to a system and method for offering wireless Internet services. More particularly, the present invention relates to a system and method for offering wireless Internet service data in a format displayable in an upright direction on a mobile terminal, regardless of whether a display unit of the terminal is in vertical or horizontal mode.

### Description of the Related Art:

Mobile terminals are handheld devices used for data transmission or wireless communications while moving. Mobile terminals include cellular phones, Personal Digital Assistants (PDAs) , Personal Communication Services (PCS) phones, International Mobile Telecommunication-2000 (IMT-2000) terminals and Global System for Mobile Communication (GSM) terminals.

Mobile terminals have become popular worldwide as a necessity among people of all ages. It is a current trend that mobile terminals are becoming smaller and lighter to improve portability, as well as multifunctional to implement various functions and services.

Also, mobile terminals are becoming more integrated than existing mobile telephones and perform high-speed data transmission as well as voice communication. For example, IMT-2000 mobile communication network services enable high-speed data transmission as well as voice communication through mobile terminals. In other words, mobile terminals can process both packet data and image data in an IMT-2000 network. Recently, mobile terminals including a display unit that is directionally rotatable and provides for a wider display area (in other words, horizontal or landscape display mode) have been launched to allow user to better view digital TV broadcasts. Users can access a web server providing wireless Internet services by implementing a browser in a mobile terminal and use various Internet services by transmitting access information, which represents the information about the mobile terminal, to the web server.

Conventional mobile terminals display wireless Internet service data received from a web server typically in a single fixed direction, regardless of the positional or rotational status of the display unit. Accordingly, users can see the data displayed only in a fixed direction (generally, in vertical or portrait display direction) on the mobile terminals. When the display unit is turned to a horizontal mode, the resulting orientation of the displayed data does not match that of the data seen by the viewer.

FIGs. I (a) and 1(b) illustrate the display of wireless Internet service data on a conventional mobile terminal.

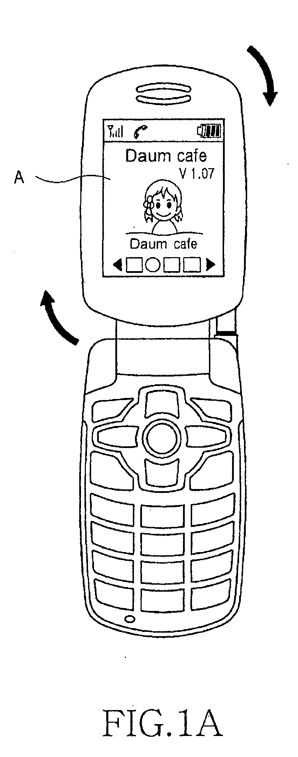

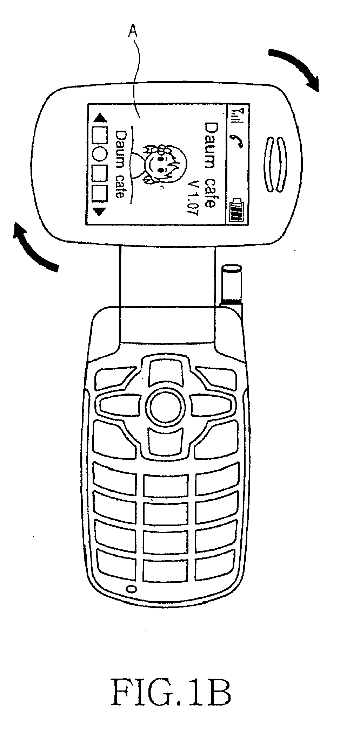

FIG. 1(a) depicts a plan view of a conventional mobile terminal with a display unit A in a vertical display mode. FIG. 1(b) depicts a plan view of a conventional mobile terminal with the display unit A turned 90° clockwise. When a folder is opened with display unit A in the vertical mode, as illustrated in FIG. 1(a), the Internet service data is displayed in a normal upright direction. However, when the folder is turned 90° clockwise to be in a horizontal mode, the data displayed is also turned 90° clockwise, which makes it difficult for the viewer to see the data in an upright position.

### SUMMARY OF THE INVENTION

Accordingly, the present invention has been made to solve the above-mentioned problems occurring in the prior art. An aspect of the present invention provides a system and method for providing wireless Internet service data in a format displayable in an upright direction on a mobile terminal, regardless of the rotation status of a display unit of the terminal. The aspect comprises a method for offering wireless Internet services in a wireless Internet service system having a web server and a plurality of mobile terminals connected to the web server via a wireless network. The method comprises the steps of receiving access information comprising rotation status of a display unit from a mobile terminal that has requested wireless Internet service, extracting information about the rotation status of the display unit from the received access information, changing wireless Internet service data provided to the mobile terminal to have a format corresponding to the extracted rotation status information, and sending the wireless Internet service data in the changed format to the mobile terminal.

In accordance with another aspect of the present invention, there is provided a web server for offering wireless Internet services to a plurality of mobile terminals connected via a wireless network. The web server comprises a storage unit for storing data for providing wireless Internet services, a radio frequency (RF) unit for receiving access information comprising rotation status of a display unit from a mobile terminal requesting wireless Internet service and sending wireless Internet service data in a format changed according to the rotation status information, a detector for extracting the rotation status information from the received access information, a converter for changing the format of the wireless Internet service data based on the extracted rotation status information, and a server controller for controlling overall operations of the web server.

In accordance with still another aspect of the present invention, there is provided a mobile terminal connected to a web server providing wireless Internet services via a wireless network. The mobile terminal comprises a display unit for displaying wireless Internet service data provided from the web server, a detector for detecting rotation status of the display unit and outputting information about the rotation status, an RF transceiver for sending access information representing information about the mobile terminal, comprising the rotation status, to the web server when a user inputs a request for wireless Internet service and receiving wireless Internet service data in a format changed according to the rotation status information from the server, and a control unit for controlling overall operations of the mobile terminal.

The mobile terminal further comprises a memory for storing a first display picture size suitable for the vertical mode of the display unit, and a second display picture size suitable for the horizontal mode of the display unit.

In accordance with still another aspect of the present invention, there is provided a method for displaying wireless Internet service data on a mobile terminal connected to a web server via a wireless network. The method comprises the steps of detecting rotation status of a display unit of the mobile terminal and outputting the detected rotation status. When a user inputs a request for a wireless Internet service, the method sends access information representing information about the mobile terminal comprising the rotation status to the web server. The method further comprises receiving corresponding wireless Internet service data in a format changed according to the rotation status information from the web server, and displaying the received data on the display unit.

### BRIEF DESCRIPTION OF THE DRAWINGS

The above aspects and features of the present invention will be more apparent by describing certain embodiments of the present invention with reference to the accompanying drawings, in which:
FIGs. 1 (a) and 1(b) illustrate display of wireless Internet service data on a conventional mobile terminal;
FIG. 2 depicts a block diagram illustrating a mobile Internet service system according to an embodiment of the present invention;
FIG. 3 depicts a block diagram illustrating a web server according to an embodiment of the present invention;
FIG. 4 depicts a block diagram illustrating a mobile terminal according to an embodiment of the present invention;
FIGs. 5(a) through 5(d) illustrate operation of a detector of the mobile terminal according to an embodiment of the present invention;
FIG. 6 shows a flow chart illustrating a process of offering a wireless Internet service in a wireless Internet service system according to an embodiment of the present invention;
FIG. 7 shows a flow chart illustrating a process of displaying wireless Internet service data on a mobile terminal according to an embodiment of the present invention;
FIG. 8 shows a flow chart illustrating a process of displaying wireless Internet service data on a mobile terminal according to another embodiment of the present invention; and
FIGs. 9(a) and 9(b) illustrate display of wireless Internet service data on a mobile terminal according to an embodiment of the present invention.

Throughout the drawings, like reference numbers should be understood to refer to like elements, features, and structures.

### DETAILED DESCRIPTION OF EXEMPLARY EMBODIMENTS

Exemplary embodiments of the present invention will now be described with reference to the accompanying drawings. The matters exemplified in this description are provided to assist in a comprehensive understanding of various embodiments of the present invention disclosed with reference to the accompanying figures. Accordingly, those of ordinary skill in the art will recognize that various changes and modifications of the exemplary embodiments described herein can be made without departing from the scope and spirit of the claimed invention. Descriptions of well-known functions and constructions are omitted for clarity and conciseness.

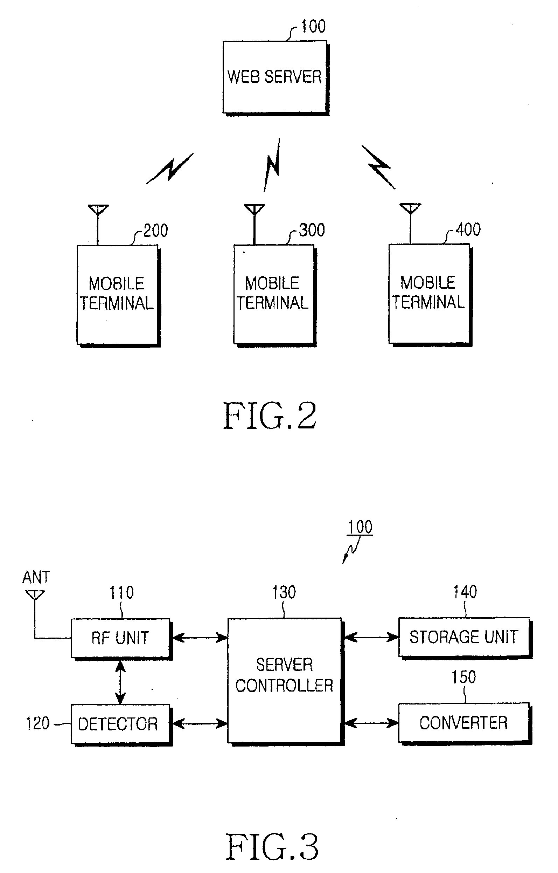

FIG. 2 depicts a block diagram illustrating a mobile Internet service system according to an embodiment of the present invention.

The wireless Internet system comprises a web server 100 and a plurality of mobile terminals 200, 300 and 400.

Web server 100 offers wireless Internet services to the plurality of mobile terminals 200, 300 and 400 connected via a wireless network (not shown). To use the wireless Internet services, a mobile user has to access the web server and send access information representing information about the mobile terminal to the web server. The access information may include information about the hardware and software of the mobile terminal, a requested wireless Internet service type, and a wireless Internet service provider.

Hardware information comprises a mobile terminal manufacturer and product model number. Software information comprises a browser type and version. Wireless Internet service type can be a WAP (Wireless Application Protocol). Wireless Internet service provider information indicates a service provider such as SKT (SK Telecom Co., Ltd.) or KTF (KT Freetel Co., Ltd.).

To use wireless Internet services on a mobile terminal, access information should be given in the user agent field of HTTP 1.1 protocol header. Information provided in the user agent field is generally encoded in a format such as "AAABCDDEEFFGGHHHIIIJJKKLLMMMMMMMM;NID;
Reg_zone;Baseid;Pilot_pn" to reduce transmission capacity. "AAA" refers to a mobile service provider. "B" refers to service type. "C" refers to mobile terminal type. "DD" refers to mobile terminal manufacturer. "EE" refers to terminal type of each manufacturer. "FF" refers to browser type. "GG" refers to terminal software version. Since the above encoding format is generally known in the art, no detailed explanation will be given.

When access information comprising rotation status of a display unit is sent to web server 100 from a mobile terminal requesting wireless Internet service, the web server 100 extracts the rotation status information from the received access information.

Web server 100 transforms the requested wireless Internet service data into a format that conforms to the rotation status information, then sends the data in a changed format to the pertinent mobile terminal connected via a wireless network. Web server 100 will be explained in further detail with reference to FIG. 3.

FIG. 3 depicts a block diagram illustrating a web server according to an embodiment of the present invention.

Referring to FIG. 3, web server 100 comprises a radio frequency (RF) unit 110, a detector 120, a server controller 130, a storage unit 140 and a converter 150.

RF unit 110 receives access information comprising the rotation status of a display unit from a mobile terminal requesting wireless Internet service. The rotation status information indicates whether the display unit of the mobile terminal is opened longitudinally in a vertical mode or turned to a horizontal mode. The vertical mode is the normal display orientation in most mobile terminals. The rotation status information may also comprise either a first display picture size suitable for the vertical mode of the display unit, or a second display picture size suitable for the horizontal mode of the display unit.

RF section 110 transforms the requested wireless Internet service data into a format corresponding to the rotation status of a display unit and sends the changed format data to the mobile terminal.

Detector 120 extracts the rotation status information from the received access information under the control of server controller 130. Server controller 130 controls overall operations of the web server 100. Server controller 130 directs converter 150 to change the format of the wireless Internet service data to conform to the rotation status information extracted by detector 120. When the rotation status information indicates a vertical mode of the display unit, server controller 130 directs the converter 150 to change the wireless Internet service data to a vertical mode format. On the other hand, when the rotation status information indicates a horizontal mode of the display unit, server controller 130 directs the converter 150 to change the data to a horizontal mode format.

When the rotation status information extracted by detector 120 comprises a display picture size corresponding to a vertical mode of the display unit of the mobile terminal (in other words, first display picture size), or a display picture size corresponding to a horizontal mode of the display unit (in other words, second display picture size), server controller 130 directs the converter 150 to change the wireless Internet service data to have the same display picture size. Server controller 130 may compress the data into a size which is 0.8 times the first display picture size (for example, 140 x 176 size) when the display data are changed to the second display size in order to prevent the data from being stretched horizontally when displayed in the horizontal mode of the display unit. The compression can be done using a conventional compression algorithm which will not be explained herein.

Storage unit 140 stores various data necessary to control operation of the web server 100. Also, storage unit 140 stores data for providing wireless Internet services.

Under the control of server controller 130, converter 150 converts the format of wireless Internet service data which will be transferred to the requesting mobile terminal.

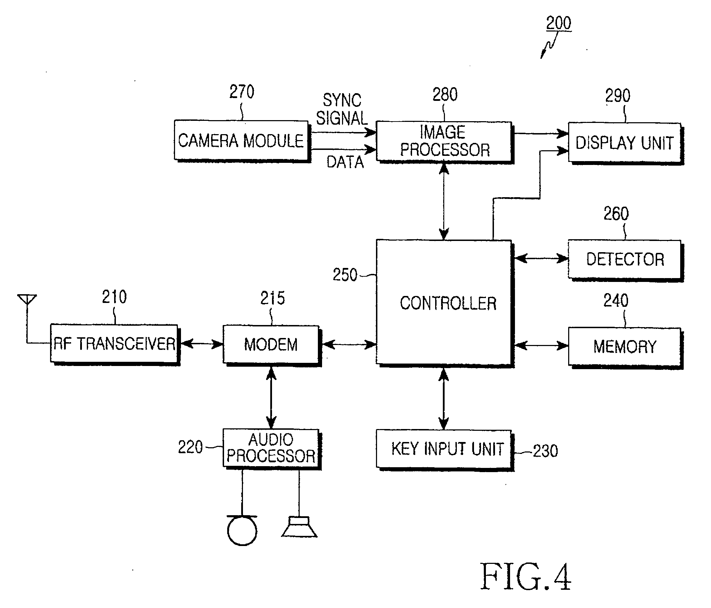

FIG. 4 depicts a block diagram illustrating a mobile terminal according to a preferred embodiment of the present invention. Referring to FIG. 4, mobile terminal 200 comprises an RF transceiver 210, a modem 215, an audio processor 220, a key input unit 230, a memory 240, a controller 250, a detector 260, a camera module 270, an image processor 280, and a display unit 290.

RF transceiver 210 transmits and receives speech data, character data, image data and control data under the control of controller 250. RF transceiver 250 comprises an RF transmitter for performing upward frequency conversion and amplification of a transmitted signal and an RF receiver for amplifying a received signal with low noise and performing downward conversion of the frequency of the signal.

When a user inputs a request for wireless Internet service, RF transceiver 210 sends access information representing information about the mobile terminal 100 comprising the rotation status of display unit 290 to web server 100. Also, RF transceiver 210 receives wireless Internet service data in a format corresponding to the rotation status from web server 100.

The rotation status information can be included in the access information by the following method.

As explained in conjunction with FIG. 2, information provided in the user agent field is encoded in a format such as "AAABCDDEEFFGGHHHIIIJJKKLLMMMMMMMM;NID;Reg_zone;Baseid;P ilot_pn". During encoding, a preset code value "0" representing a vertical mode of display unit 290, or "1" representing a horizontal mode of display unit 290, can be included between each information. When web server 100 receives access information comprising the rotation status of display unit 290, it can analyze the access information to detect any preset code value "0" or "1" and determine the rotation status of display unit 290 according to the detected code value.

Although not illustrated, mobile terminal 100 may further comprise a data receiver for receiving digital broadcasting data.

Modem 215 comprises a transmitter for coding and modulating a transmitted signal and a receiver for demodulating and decoding a received signal.

Audio processor 220 may comprise a codec which comprises a data codec for processing packet data, and an audio codec for processing an audio signal such as a speech signal. Audio processor 220 converts a digital audio signal outputted from modem 215 into an analog signal through the audio codec and reproduces the analog signal. Also, audio processor 220 converts an analog audio signal generated from a microphone into a digital audio signal and transmits the digital audio signal to modem 215. The codec can be provided as an independent element or included within controller 250.

Key input unit 230, comprising a key matrix structure (not shown), is provided with keys for inputting numbers and characters, function keys for setting up various functions, and an external volume key. Key input unit 230 outputs a signal corresponding to the user's key input to controller 250.

Memory 240 may be composed of a program memory and a data memory. Memory 240 stores programs for controlling operations of mobile terminal 200 and various information selected by the use. Memory 240 also stores information about the first and second display picture sizes corresponding, respectively, to the vertical and horizontal modes of display unit 290. First and second display picture sizes, for example, can be 176 x 220 and 220 x 176, respectively.

Controller 250 controls the overall operation of mobile terminal 200. Controller 250 may comprise modem 215 and the codec. When wireless Internet service data in a format corresponding to the rotation status detected by detector 260 is received from web server 100, which is either a vertical or horizontal mode of display unit 290, controller 250 adjusts the received data to the first or second display picture size stored in memory 240 and displays the data in the adjusted size.

Controller 250 may also control RF transceiver 210 to send web server 100 access information comprising first or second display picture size stored in memory 240 according to the rotation status detected by detector 260. In other words, controller 250 comprises a code value representing a first display picture size, such as 176 x 220, or a second display picture size, such as 220 x 170, of display unit 290 in the access information when encoding information of the mobile terminal in a predetermined format. Accordingly, web server 100 can send requested wireless Internet service data in the first or second display picture size based on the code value included in the access information. The data received from web server 100 can be directly displayed on display unit 290 without any size adjustment.

When detector 260 detects any change of the rotation status of display unit 290 (for example, from the vertical mode to the horizontal mode) during the display of wireless Internet service data received from web server 100, controller 250 directs the RF transceiver to send new rotation status information to web server 100. When controller 250 receives the wireless Internet service data in a new format corresponding to the current rotation status from web server 100, it then displays the new format data on display unit 290.

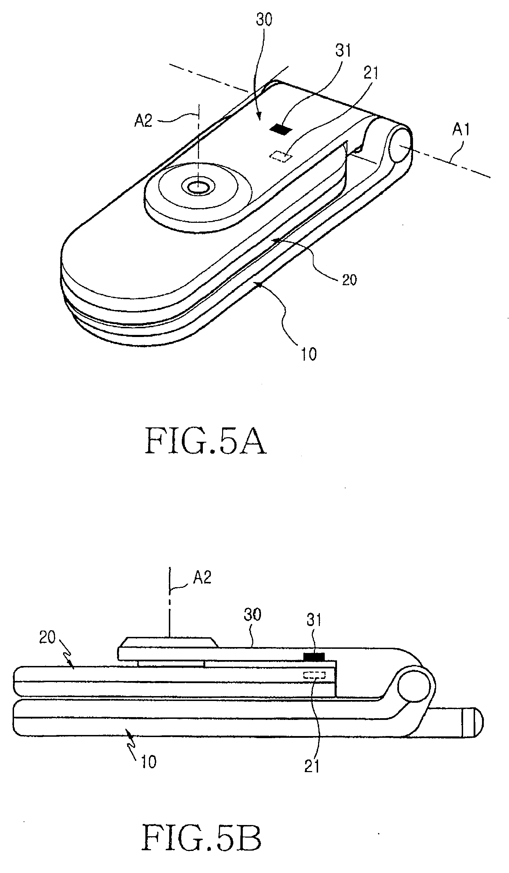

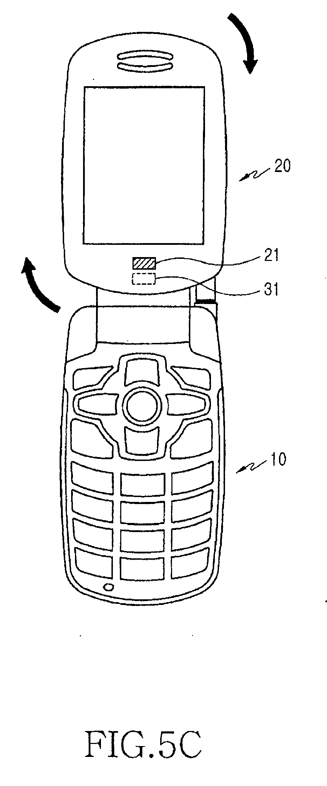

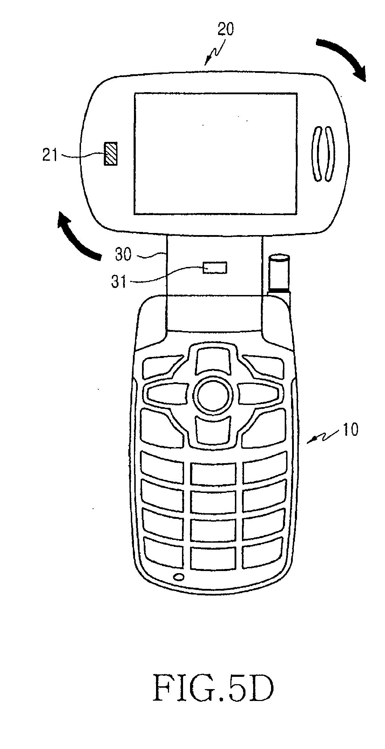

Detector 260 detects the rotation status of display unit 290 and outputs the detected rotation status information to controller 250. A method for detecting the rotation status of display unit 290 will be explained in detail with reference to FIG. 5.

Camera module 270 is used to take pictures. Camera module 270 comprises a camera sensor for converting an optical signal into an electric signal and a signal processor for converting an analog image signal photographed by the camera sensor into digital data. Supposing that the camera sensor is a charge coupled device (CCD) sensor, the signal processor can be a digital signal processor (DSP). The camera sensor and the signal processor can be either integrated into a single element or separated as independent elements.

Image processor 280 generates picture data for displaying an image signal outputted from camera module 270. Image processor 280 processes image signals outputted from camera module 270 in frames. Also, image processor 280 adjusts the frame image data to conform to the features, such as size and resolution, which are displayable on display unit 290, and outputs the adjusted frame image data. Image processor 280 comprises an image codec to compress the frame image data displayed on display unit 290 in a preset manner, or restore the compressed frame image data to the original frame image data. Supposing that image processor 280 has an On Screen Display (OSD) function, image processor 280 outputs OSD data according to the displayed picture size under the control of controller 250.

Display unit 290 outputs various display data generated by the mobile terminal. Display unit 290 may comprise an LCD. When the LCD is a touch screen, it can serve as an input device. Display unit 290 displays image data outputted from image processor 280 and user data outputted from controller 250. Display unit 290 also displays wireless Internet service data provided from web server 100 under the control of controller 250.

FIGs. 5(a) through 5(d) illustrate operation of the detector of the mobile terminal according to a preferred embodiment of the present invention.

FIG. 5(a) depicts a perspective view of the mobile terminal when closed. FIG. 5(b) depicts a side view of the mobile terminal in FIG. 5(a). Referring to FIGs. 5(a) and 5(b), the mobile terminal comprises a main housing 10 having a first hinge axis A1 at one end thereof, a folder 20 having a first sensor 21 and a connection member 30 having a second sensor 31. Main housing 10 is provided with a plurality of key buttons and a microphone. Connection member 30 provides a second hinge axis A2 around which folder 20 can rotate. Connection member 30 can rotate around the first hinge axis A1 in such a direction that folder 20 moves towards or away from the main housing 10. Folder 20 can rotate around the second hinge axis A2 in a substantially vertical or horizontal display direction.

FIG. 5(c) depicts a plan view of the mobile terminal when the opened folder 20 is not rotated. FIG. 5(d) depicts a plan view of the mobile terminal when the opened folder 20 is rotated 90° clockwise.

When folder 20 is rotated to change to a horizontal mode (FIG. 5(d)) from a vertical mode (FIG.5(c)), first sensor 21 of folder 20 is separated from second sensor 31 of the connection member 30. When detector 260 outputs a signal indicating that first sensor 21 and second sensor 31 meet together, controller 250 determines that the display unit 290 is in the vertical mode. When detector 260 outputs a signal indicating that first sensor 21 is separated from second sensor 31, controller 250 then determines that the display unit 290 is in the horizontal mode.

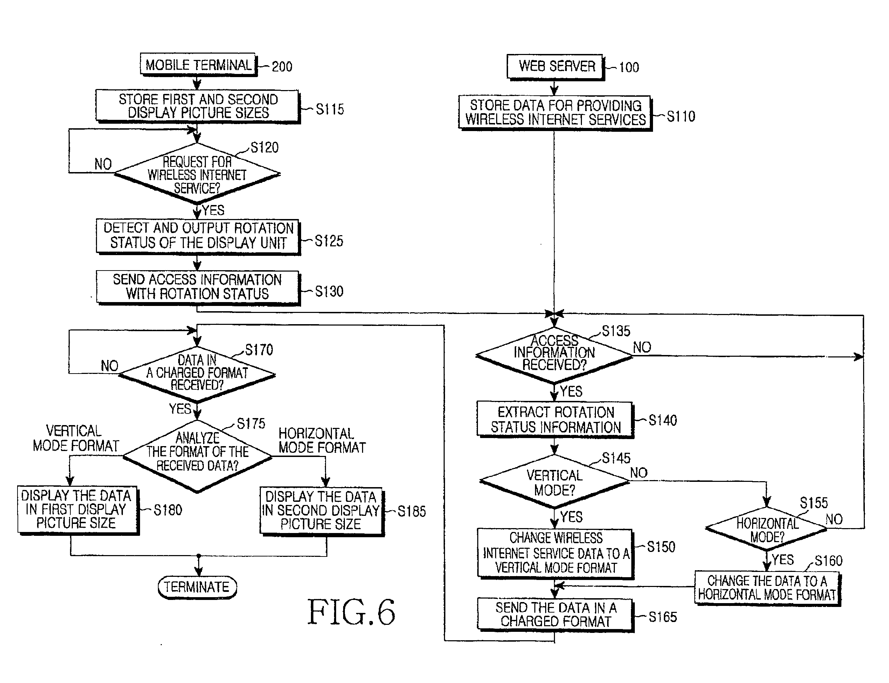

FIG. 6 shows a flow chart illustrating a process of offering a wireless Internet service in a wireless Internet service system according to an embodiment of the present invention.

The process shown by FIG. 6 will be explained with reference to FIGs. 2 through 4. TWeb server 100 stores various data for providing wireless Internet services at step S110.

Mobile terminal 200 stores the first display picture size (for example, 176 x 220) suitable for the vertical mode of display unit 290, and the second display picture size (for example, 220 x 176) suitable for the horizontal mode of display unit 290 at step S 115.

When a user inputs a request for a wireless Internet service (for example, a key preset to use a wireless Internet service) at step S120, mobile terminal 200 detects the rotation status of display unit 290 and outputs the rotation status information, indicating either the vertical mode or the horizontal mode at step S125.

Mobile terminal 200 contains the rotation status information in access information that represents information about the mobile terminal and sends the access information with the rotation status information to web server 100 at step S130. A method for containing the rotation status information in the access information has been explained with reference to FIG. 4.

The Web server 100 determines whether access information is received from mobile terminal 200 at the step S135.

Web server 100 extracts the rotation status information from the received access information at step S140 if the access information is received. Web server 100 also determines whether the rotation status information indicates the vertical mode of display unit 290 at step S 145. In the affirmative, web server 100 changes wireless Internet service data provided to mobile terminal 200 to a format corresponding to the vertical mode at step S 150.

If the rotation status information does not indicate the vertical mode, web server 100 determines whether the information indicates the horizontal mode of display unit 290 at step S 155. If the information indicates the horizontal mode, web server 100 will change the wireless Internet service data to a format corresponding to the horizontal mode at step S160.

Web server 100 sends wireless Internet service data in a format changed according to the rotation status information to the mobile terminal 200 at step S165.

The mobile terminal 200 determines whether display data in the changed format is received from the Web server at step S170

When receiving the wireless Internet service data from web server 100, mobile terminal 200 analyzes the format of the received data if display data in the changed format is received at step S175.

If the received data has a format corresponding to the vertical mode, mobile terminal 200 will display the data in the previously stored first display picture size at step S180.

If the received data has a format corresponding to the horizontal mode, mobile terminal 200 will then display the data in the previously stored second display picture size at step S 185. At this time, mobile terminal 200 can compress the data into a proportional size which is 0.8 times the first display picture size (for example, into a 140 x 176 size) and display the compressed data. Such compression prevents the data from being stretched horizontally when displayed in the horizontal display mode.

When web server 100 receives information indicating the first display picture size for the vertical mode or the second display picture size for the horizontal mode, it may change the wireless Internet service data provided to mobile terminal 200 to have the same display picture size based on the received information. Web server 100 may also compress the data into a size which is 0.8 times the first display picture size (for example, into a 140 x 176 size).

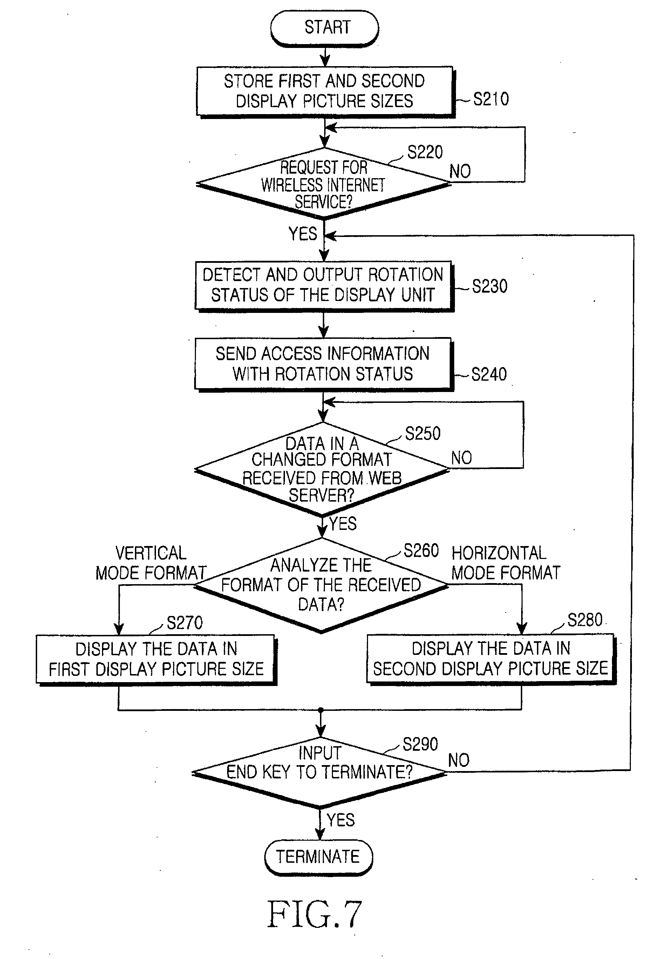

FIG. 7 shows a flow chart illustrating a process of displaying wireless Internet service data on a mobile terminal according to an embodiment of the present invention.

The process shown by FIG. 7 will be explained with reference to FIGs. 2 through 4.

Controller 250 stores the first display picture size (for example, 176 x 220) suitable for the vertical mode of display unit 290 and the second display picture size (for example, 220 x 176) suitable for the horizontal mode of display unit 290 in memory 240 at step S210.

When the user inputs a request for a wireless Internet service (for example, a key preset to use a wireless Internet service) at step S220, detector 260 detects the rotation status of display unit 290 and outputs the rotation status information, which indicates either the vertical mode or the horizontal mode, at step S230.

Controller 250 contains the rotation status information in access information that represents information about mobile terminal 200, and sends the access information with the rotation status information to web server 100 at step S240.

Controller 250 checks whether RF transceiver 210 has received any wireless Internet service data from web server 100 in response to the rotation status information at step S250.

When wireless Internet service data is received, controller 250 analyzes the format of the received data at step S260. If the received data has a format corresponding to the vertical mode, controller 250 will display the data in the first display picture size previously stored in memory 240 at step S270. If the received data has a format corresponding to the horizontal mode, controller 250 will then display the data in the second display picture size previously stored in memory 240 at step S280. At this time, controller 250 can compress the data into a proportional size which is 0.8 times the first display picture size (for example, into a 140 x 176 size) and display the compressed data. Such compression prevents the data from being stretched horizontally when displayed in the horizontal display mode.

Controller 250 determines whether the user has inputted an end key to terminate the use of the wireless Internet service at step S290.

Upon input of the end key, controller 250 terminates the process of receiving and displaying the wireless Internet service data. Otherwise, controller 250 returns to step S230, which detects the rotation status of display unit 290, and repeats steps S230 through S280 until the user input the end key.

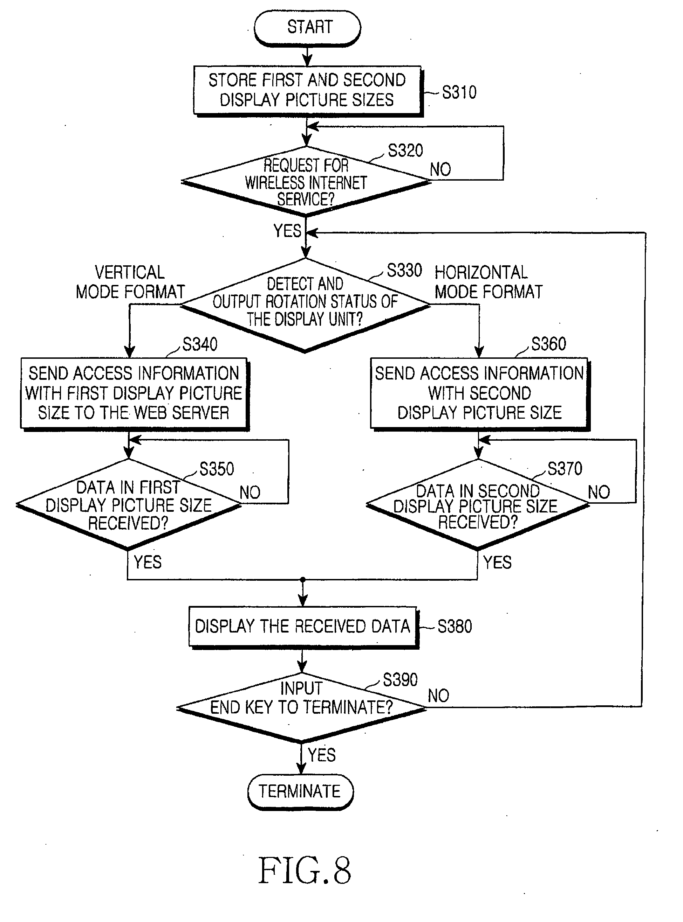

FIG. 8 shows a flow chart illustrating a process of displaying wireless Internet service data on a mobile terminal according to another embodiment of the present invention.

The process shown by FIG. 8 will be explained with reference to FIGs. 2 through 4.

Controller 250 stores the first display picture size (for example, 176 x 220) suitable for the vertical mode of display unit 290 and the second display picture size (for example, 220 x 176) suitable for the horizontal mode of display unit 290 in memory 240 at step S310.

Controller 250 checks whether a user has inputted a request for wireless Internet service (for example, a key preset to use a wireless Internet service) at step S320. If the request is inputted, detector 260 will detect the rotation status of the display unit 290 at step S330.

If display unit 290 is in the vertical mode, controller 250 will send access information comprising the first display picture size (176 x 220) stored in memory 240 to the web server 100 at step S340. When the requested wireless Internet service data in the same display picture size is received from web server 100 at step S350, controller 250 displays the received data on the display unit 290 at step S380.

If the rotation status detected by the detector at step S330 is the horizontal mode of the display unit 290, controller 250 will send the access information comprising the second display picture size (220 x 176) stored in memory 240 to the web server 100 at step S360. When the requested wireless Internet service data in the second display picture size is received from web server 100 at step S370, controller 250 displays the received data on display unit 290 at step S380. Controller 250 then determines whether the user has inputted an end key to terminate the use of the wireless Internet service at step S390.

Upon input of the end key, controller 250 terminates the process of receiving and displaying the wireless Internet service data. Otherwise, controller 250 returns to step S330 of detecting the rotation status of display unit 290 and repeats steps S330 through S380 until the user input the end key.

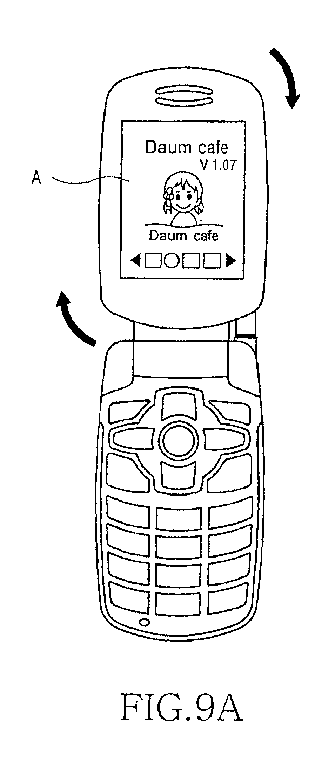

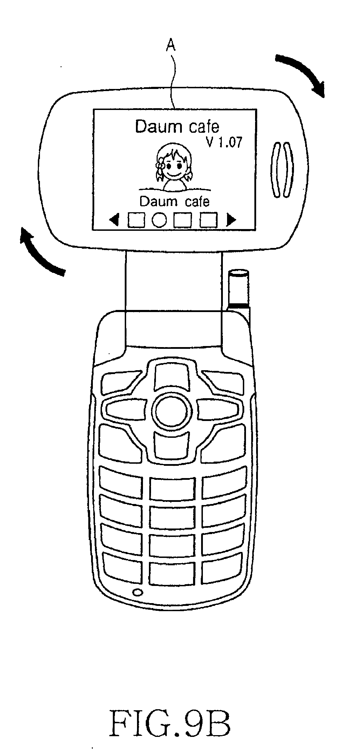

FIGs. 9(a) and 9(b) depict views illustrating the display of wireless Internet service data on a mobile terminal according to an embodiment of the present invention.

FIG. 9(a) depicts a plan view of the mobile terminal with the display unit A in the vertical mode. FIG. 9(b) depicts a plan view of the mobile terminal with the display unit A turned to the horizontal mode.
When the folder is opened with the display unit A in the vertical mode, as illustrated in FIG. 9(a), the wireless Internet service data is displayed in a vertical mode format. When the folder is turned 90° clockwise to the horizontal mode, the data is then displayed in a horizontal mode format. Accordingly, a user can see the displayed data in an upright position regardless of the rotation status of the display unit.

While the present invention has been particularly shown and described with reference to certain exemplary embodiments thereof, it will be understood by those of ordinary skill in the art that various changes in form and detail may be made therein without departing from the scope of the present invention as defined by the appended claims, including the full scope of equivalents thereof.

## Claims

1. A method for providing wireless Internet services in a wireless Internet service system, the method comprising:
receiving access information comprising rotation status information of a display unit of a mobile terminal;
extracting information about the rotation status of the display unit from the access information;
changing wireless Internet service data to have a format corresponding to the extracted rotation status information; and
sending the wireless Internet service data in the changed format to the mobile terminal.

2. The method as claimed in claim 1, wherein said rotation status information comprises information indicating that the display unit of the mobile terminal is opened longitudinally in a vertical mode and information indicating that the display unit is turned to a horizontal mode.

3. The method as claimed in claim 2, wherein said wireless Internet service data is changed to a vertical mode format if the extracted rotation status information indicates the display unit is positioned in the vertical mode.

4. The method as claimed in claim 2, wherein said wireless Internet service data is changed to a horizontal mode format if the extracted rotation status information indicates the display unit is positioned in the horizontal mode.

5. The method as claimed in claim 1, wherein said rotation status information comprises any one of a first display picture size suitable for a vertical mode of the display unit and a second display picture size suitable for a horizontal mode of the display unit.

6. The method as claimed in claim 5, wherein said wireless Internet service data is changed to have the first display picture size if the extracted rotation status information corresponds to the vertical mode.

7. The method as claimed in claim 5, wherein said wireless Internet service data is changed to have the second display picture size if the extracted rotation status information corresponds to the horizontal mode.

8. A web server for offering wireless Internet services, comprising:
a storage unit for storing data for providing wireless Internet services;
an RF unit for receiving access information comprising rotation status information of a display unit of a mobile terminal, said RF unit being adapted to send wireless Internet service data in a format changed according to the rotation status information;
a detector for extracting the rotation status information from the received access information;
a converter for changing the format of the wireless Internet service data based on the extracted rotation status information; and
a server controller for controlling overall operations of the web server.

9. The web server as claimed in claim 8, wherein said rotation status information comprises information indicating that the display unit of the mobile terminal is opened in a vertical mode and information indicating that the display unit is turned to a horizontal mode.

10. The web server as claimed in claim 9, wherein said server controller changes the wireless Internet service data to have a vertical mode format if the extracted rotation status information indicates the display unit is positioned in the vertical mode.

11. The web server as claimed in claim 9, wherein said server controller changes the wireless Internet service data to have a horizontal mode format if the extracted rotation status information indicates of the display unit is positioned in the horizontal mode.

12. The web server as claimed in claim 8, wherein said rotation status information comprises any one of a first display picture size suitable for a vertical mode of the display unit and a second display picture size suitable for a horizontal mode of the display unit.

13. The web server as claimed in claim 12, wherein said server controller changes the wireless Internet service data to have the first display picture size if the extracted rotation status information corresponds to the vertical mode.

14. The web server as claimed in claim 12, wherein said server controller changes the wireless Internet service data to have the second display picture size if the extracted rotation status information corresponds to the horizontal mode.

15. The web server as claimed in claim 8, wherein said server controller changes the format of the wireless Internet service data to a format based on rotation status information, the controller being adapted to send the wireless Internet service data in the changed format to the mobile terminal.

16. A mobile terminal comprising:
a display unit for displaying wireless Internet service data;
a detector for detecting rotation status of the display unit and outputting information about the rotation status;
an RF transceiver for sending access information comprising the rotation status to a web server, the RF transceiver being adapted to receive wireless Internet service data in a format changed according to the rotation status from the server; and
a control unit for controlling overall operations of the mobile terminal.

17. The mobile terminal as claimed in claim 16, wherein said rotation status information comprises information indicating that the display unit of the mobile terminal is opened in a vertical mode and information indicating that the display unit is turned to a horizontal mode.

18. The mobile terminal as claimed in claim 17, further comprising a memory for storing a first display picture size suitable for the vertical mode of the display unit and a second display picture size suitable for the horizontal mode of the display unit.

19. The mobile terminal as claimed in claim 18, wherein said controller, upon receiving the wireless Internet service data in a vertical mode format from the web server, displays the data in the first display picture size stored in the memory.

20. The mobile terminal as claimed in claim 18, wherein said controller, upon receiving the wireless Internet service data in a horizontal mode format from the web server, displays the data in the second display picture size stored in the memory.

21. The mobile terminal as claimed in claim 18, wherein said controller provides the first display picture size or the second display picture size in the access information according to the rotation status of the display unit.

22. The mobile terminal as claimed in claim 21, wherein said RF transceiver receives the wireless Internet service data in the same display picture size as included in the access information from the web server.

23. The mobile terminal as claimed in claim 16, wherein said controller sends new rotation status information to the web server when the detector detects any change of the rotation status of the display unit.

24. The mobile terminal as claimed in claim 23, wherein said controller sends new rotation status information during the display of wireless Internet service data provided from the web server.

25. A method for displaying wireless Internet service data on a mobile terminal, the method comprising:
detecting rotation status of a display unit of the mobile terminal;
outputting the detected rotation status when a user inputs a request for a wireless Internet service;
sending access information representing information about the mobile terminal to a web server, the access information comprising the rotation status information;
receiving corresponding wireless Internet service data in a format changed according to the rotation status information from the web server; and
displaying the received data on the display unit.

26. The method as claimed in claim 25, wherein said rotation status information comprises information indicating that the display unit of the mobile terminal is opened in a vertical mode and information indicating that the display unit is turned to a horizontal mode.

27. The method as claimed in claim 26, further comprising storing, in a memory, a first display picture size suitable for the vertical mode of the display unit and a second display picture size suitable for the horizontal mode of the display unit.

28. The method as claimed in claim 27, wherein said wireless Internet service data in a format changed according to the rotation status information received from the web server is displayed in the first or second display picture size stored in the memory.

29. The method as claimed in claim 27, wherein said access information comprises the first display picture size or the second display picture size according to the rotation status of the display unit.

30. The method as claimed in claim 29, wherein said wireless Internet service data in the same display picture size as included in the access information is received from the web server.

31. A computer readable medium having stored thereon instructions for displaying wireless Internet service data on a mobile terminal, the computer readable medium comprising:
instructions for detecting rotation status of a display unit of the mobile terminal;
instructions for outputting the detected rotation status when a user inputs a request for a wireless Internet service;
instructions for sending access information representing information about the mobile terminal to a web server, the access information comprising the rotation status information;
instructions for receiving corresponding wireless Internet service data from the web server in a format changed according to the rotation status information from the web server; and
instructions for displaying the received data on the display unit.

32. A computer readable medium having stored thereon instructions for providing wireless Internet services in a wireless Internet service system, the computer readable medium comprising:
instructions for receiving access information comprising rotation status information of a display unit of a mobile terminal;
instructions for extracting information about the rotation status of the display unit from the access information;
instructions for changing wireless Internet service data to have a format corresponding to the extracted rotation status information; and
instructions for sending the wireless Internet service data in the changed format to the mobile terminal.
